# EUROPÄISCHE PATENTANMELDUNG

(11) **EP 1 870 376 A2**
(43) Veröffentlichungstag der Anmeldung: **26.12.2007**
(21) Anmeldenummer: 07011800.5
(22) Anmeldetag: 15.06.2007
(51) Int. Cl.: C01B 3/38, B01J 8/04

(54) **Reformersystem**

(30) Priorität: 22.06.2006 DE 102006028699
(71) Anmelder: J. Eberspächer GmbH & Co. KG, 73730 Esslingen (DE)
(72) Erfinder: Kaupert, Andreas, 73730 Esslingen (DE)
(74) Vertreter: Ruttensperger, Bernhard

(57) **Zusammenfassung**

Ein Reformersystem zur Erzeugung eines wasserstoffhaltigen Gases für ein Brennstoffzellensystem, insbesondere in einem Kraftfahrzeug, umfasst eine mit Kohlenwasserstoff und Mischmaterial zu speisende Verdampferanordnung (12) zur Erzeugung eines Kohlenwasserstoffdampf/Mischmaterial-Gemisches und eine Reformeranordnung (14) mit Reformerkatalysatormaterial (40, 42) zur Umsetzung des Kohlenwasserstoffdampf/Mischmaterial-Gemisches zu wasserstoffhaltigem Gas, wobei die Reformeranordnung (14) von einem Mischmaterialströmungsraum (22) umgeben ist, welcher von wenigstens einem Teil des in die Verdampferanordnung (12) einzuleitenden Mischmaterials durchströmbar ist zur Übertragung von Wärme zwischen der Reformeranordnung (14) und dem Mischmaterial, ist dadadurch gekennzeichnet, dass dem Mischmaterial-Strömungungsraum (22) eine Zündanordnung (52) zugeordnet ist zum Zünden und Verbrennen des durch diesen hindurchströmenden Mischmaterials im Mischmaterialströmungsraum.

## Beschreibung

Die vorliegende Erfindung betrifft ein Reformersystem zur Erzeugung eines wasserstoffhaltigen Gases für ein Brennstoffzellensystem, insbesondere in einem Kraftfahrzeug, umfassend eine mit Kohlenwasserstoff und Mischmaterial zu speisende Verdampferanordnung zur Erzeugung eines Kohlenwasserstoffdampf/Mischmaterial-Gemisches, eine Reformeranordnung mit Reformerkatalysatormaterial zur Umsetzung des Kohlenwasserstoffdampf/Mischmaterial-Gemisches zu wasserstoffhaltigem Gas, wobei die Reformeranordnung von einem Mischmaterialströmungsraum umgeben ist, welcher von wenigstens einem Teil des in die Verdampferanordnung einzuleitenden Mischmaterials durchströmbar ist zur Übertragung von Wärme zwischen der Reformeranordnung und dem Mischmaterial. Ferner betrifft die Erfindung ein Verfahren zum Betreiben eines derartigen Reformersystems.

Ein derartiges Reformersystem ist aus der DE 10 2004 020 507 A1 bekannt. Bei diesem Reformersystem strömt das im Wesentlichen aus Luft und Brennstoffzellenabgas, also Anodenabgas, zusammengesetzte Mischmaterial durch den Mischmaterialströmungsraum und somit entlang der Außenseite der Reformeranordnung, in welcher dieses dann auch noch mit Kohlenwasserstoffdampf durchmischte Mischmaterial zu einem wasserstoffhaltigen Gas, allgemein auch als Reformat bezeichnet, umgesetzt wird. Ein Teil der bei diesem Umsetzungsprozess entstehenden Wärme kann auf das in dem Mischmaterialströmungsraum strömende Mischmaterial übertragen werden, so dass dieses vorgewärmt in die Reformeranordnung eingeleitet werden kann und somit ein stabiler Reformierungsprozess bei den geeigneten Temperaturen sichergestellt werden kann.

Ein Problem dieser Anordnung ist, dass bereits in der Startphase des Reformersystems, also am Beginn des Umsetzungsprozesses, das Mischmaterial den Mischmaterialströmungsraum durchströmt und auch in dieser Phase bereits Wärme aus dem Bereich der Reformeranordnung abgezogen wird. In dieser Phase hat jedoch die Reformeranordnung die erforderliche Betriebstemperatur für einen stabilen Umsetzprozess noch nicht erlangt, so dass durch die Umströmung der Reformeranordnung mit dem vergleichsweise kalten Mischmaterial das Erreichen der Prozesstemperatur hinausgezögert wird.

Aus der DE 103 59 231 A1 ist es bekannt, in eine Reformeranordnung einen Brennstoffstrom, also Kohlenwasserstoffstrom, und einen Mischmaterialstrom einzuleiten. Der Mischmaterialstrom, welcher im Wesentlichen zusammengesetzt ist aus Luft und Anodenabgas, wird in einer vor einem Reaktionsraum der Reformeranordnung, in welchem das Reformat erzeugt wird, liegenden Reaktionskammer gezündet und verbrannt. Auf diese Art und Weise soll bei diesem Stand der Technik der in dem Mischmaterial, also dem Gemisch aus Anodenabgas und Luft, enthaltene Wasseranteil erhöht und somit der Reformierungswirkungsgrad in dem Reaktionsraum erhöht werden.

Es ist die Aufgabe der vorliegenden Erfindung, ein gattungsgemäßes Reformersystem so weiterzubilden, dass die Startphase des Reformierprozesses bei einfachem Aufbau verkürzt werden kann.

Erfindungsgemäß wird diese Aufgabe gelöst durch ein Reformersystem zur Erzeugung eines wasserstoffhaltigen Gases für ein Brennstoffzellensystem, insbesondere in einem Kraftfahrzeug, umfassend eine mit Kohlenwasserstoff und Mischmaterial zu speisende Verdampferanordnung zur Erzeugung eines Kohlenwasserstoffdampf/Mischmaterial-Gemisches, eine Reformeranordnung mit Reformerkatalysatormaterial zur Umsetzung des Kohlenwasserstoffdampf/Mischmaterial-Gemisches zu wasserstoffhaltigem Gas, wobei die Reformeranordnung von einem Mischmaterialströmungsraum umgeben ist, welcher von wenigstens einem Teil des in die Verdampferanordnung einzuleitenden Mischmaterials durchströmbar ist zur Übertragung von Wärme zwischen der Reformeranordnung und dem Mischmaterial.

Dieses System ist weiter dadurch gekennzeichnet, dass dem Mischmaterial-Strömungungsraum eine Zündanordnung zugeordnet ist zum Zünden und Verbrennen des durch diesen hindurchströmenden Mischmaterials im Mischmaterialströmungsraum.

Bei dem erfindungsgemäßen Aufbau eines Reformersystems wird durch die Verbrennung des in thermische Wechselwirkung mit der Reformeranordnung tretenden Mischmaterials dafür gesorgt, dass vor allem in der Startphase der Reformierung der Reformeranordnung selbst keine Wärme entzogen wird, sondern durch die bei Verbrennung des Mischmaterials entstehende Wärme die Reformeranordnung bzw. das darin angeordnete Reformerkatalysatormaterial zusätzlich erwärmt werden. Dies führt zu einem deutlich schnelleren Anstieg der Temperatur des Reformerkatalysatormaterials auf die erforderliche Prozesstemperatur, um dann einen stabilen Reformierungsprozess zur Erzeugung eines wasserstoffhaltigen Gases durchführen zu können. Ferner dient die bei dieser Verbrennung entstehende Wärme dazu, dass das Mischmaterial bzw. die bei der Verbrennung des Mischmaterials entstehenden Verbrennungsgase mit höherer Temperatur in die Reformeranordnung eingeleitet werden können, was zur Stabilisierung der Gemischbildung ("kalte Flamme") beiträgt. Ferner wird bei dieser Verbrennung Wasser erzeugt, das zusammen mit den anderen Verbrennungsgasen bzw. Bestandteilen in die Reformeranordnung eingeleitet wird und bei der katalytischen Reaktion zu Wasserstoff umgesetzt wird und auch zur Verringerung der Rußbildung beiträgt. Nach Erreichen dieser Prozesstemperatur kann dann die Verbrennung im Bereich des Mischmaterialströmungsraums beendet werden, so dass nachfolgend dann durch diesen hindurchtretendes Mischmaterial Wärme von der Reformeranordnung aufnehmen kann, diese also kühlen kann, um einen übermäßigen Temperaturanstieg über die geeignete Prozesstemperatur hinaus zu verhindern.

Beispielsweise kann eine Fördervorrichtung vorgesehen sein, zum Fördern von Luft und Anodenabgas aus einem Brennstoffzellensystem als Mischmaterial oder Mischmaterialbestandteil durch den Mischmaterialströmungsraum. Ferner betrifft die Erfindung ein Verfahren zum Betreiben eines erfindungsgemäßen Reformersystems, bei welchem Verfahren Luft und Anodenabgas eines Brennstoffzellensystems als Mischmaterial oder Mischmaterialbestandteil im Mischmaterialströmungsraum verbrannt und zur Verdampferanordnung geleitet wird, wobei die Luft mit derartigem Überschuss bezüglich des Anodenabgases zugeführt wird, dass bei nachfolgender Durchmischung der in die Verdampferanordnung eingeleiteten Luft mit Kohlenwasserstoffdampf ein unterstöchiometrisches Luft/Kohlenwasserstoffdampf-Gemischverhältnis erzeugt wird.

Wichtig ist dabei also, dass auch dann, wenn Mischmaterial in dem Mischmaterialströmungsraum verbrannt wird, die bei dieser Verbrennung entstehenden Verbrennungsprodukte noch ausreichend Luft bzw. Sauerstoff enthalten, dass bei nachfolgender Einleitung in die Reformeranordnung zusammen mit dem Kohlenwasserstoffdampf der Umsetzungsprozess geeignet ablaufen kann. Hier ist es beispielsweise vorteilhaft, ein unterstöchiometrisches Gemischverhältnis mit einem Lambda-Wert von etwa 0,4 zu erzeugen, wobei dieses Gemischverhältnis sich auf das Verhältnis von Luft/Kohlenwasserstoffdampf in der Mischkammer bezieht und dementsprechend zuvor bereits ein entsprechendes Verhältnis von Luft und Anodenabgas zur Durchströmung bzw. Verbrennung im Mischmaterialströmungsraum bereitgestellt werden muss.

Vorteilhafterweise ist weiter vorgesehen, dass das den Mischmaterialströmungsraum durchströmende Mischmaterial zumindest in einer Startphase des Reformersystems gezündet und verbrannt wird. Somit kann in der Startphase des Reformersystems eine Auskühlung der Reformeranordnung vermieden bzw. diese zusätzlich erwärmt werden, während nach der Startphase, also dann, wenn im Wesentlichen die Prozesstemperatur erreicht ist, Wärme aus dem Bereich der Reformeranordnung abgetragen werden kann.

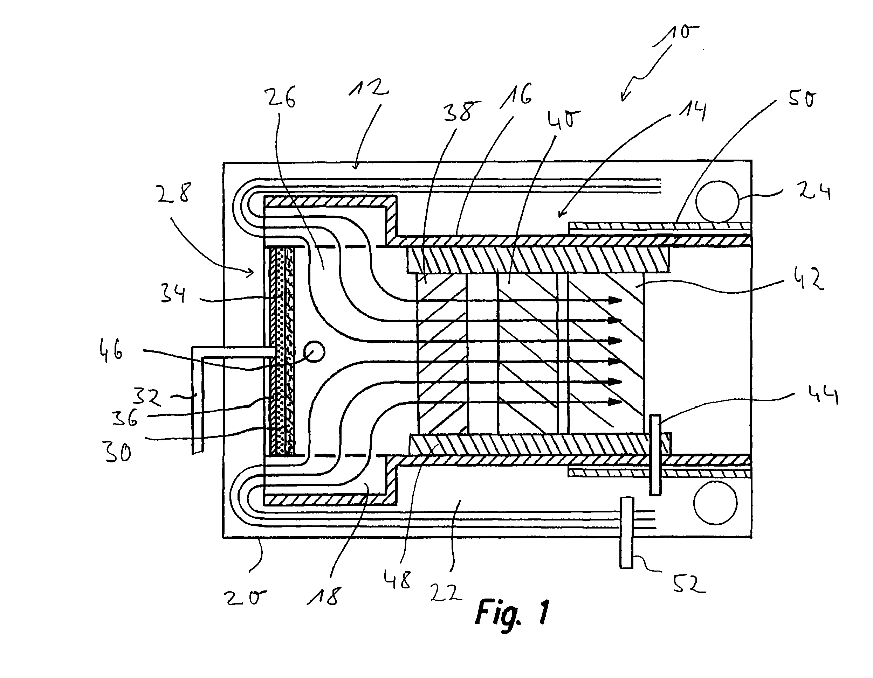

Die vorliegende Erfindung wird nachfolgend mit Bezug auf die beiliegende Fig. 1 detailliert erläutert, welche eine Prinzip-Schnittdarstellung eines erfindungsgemäßen Reformersystems zeigt.

In Fig. 1 ist ein erfindungsgemäßes System allgemein mit 10 bezeichnet. Dieses Reformersystem 10 kann grundsätzlich aufgegliedert werden in einen Verdampferbereich bzw. eine Verdampferanordnung 12 und einen Reformerbereich bzw. eine Reformeranordnung 14. Die Verdampferanordnung 12 und die Reformeranordnung 14 können mit ihren wesentlichen Bestandteilen in einem gemeinsamen, röhrenartigen Gehäuse 16 angeordnet sein, das zum Bereitstellen eines ringartigen Einleitungsraumes 18 im Übergang zwischen der Verdampferanordnung 12 und der Reformeranordnung 14 radial erweitert sein kann. Dieses Gehäuse 16 ist von einem äußeren Gehäuse 20 umgeben, so dass insbesondere in dem die Reformeranordnung 14 umgebenden Bereich ein Mischmaterialströmungsraum 22 gebildet ist. In diesen tritt Mischmaterial über Eintrittsöffnungen 24 ein, strömt dann entlang der Reformeranordnung 14 und der Außenseite der Verdampferanordnung 12 um nach axialer Umleitung in den ringartigen Einleitungsraum 18 und von diesem in eine Mischkammer 26 zu gelangen.

Diese Mischkammer 26 ist axial begrenzt durch eine Bodenbaugruppe 28, die an ihrer der Mischkammer 26 zugewandten Seite ein poröses Verdampfermedium 30 aufweist. Eine Brennstoffzuführleitung 32 speist flüssigen Brennstoff bzw. Kohlenwasserstoff in dieses poröse Verdampfermedium 30 ein. Eine an der Rückseite des porösen Verdampfermediums vorgesehene elektrisch erregbare Heizeinrichtung 34, die an einem Träger 36 mit Isolierung getragen ist, erwärmt das poröse Verdampfermedium 30 und trägt somit zur verstärkten Abdampfung des Kohlenwasserstoffs in Richtung zur Mischkammer 26 hin bei. Der so erzeugte Kohlenwasserstoffdampf vermischt sich in der Mischkammer 26 mit dem in diese eingeleiteten Mischmaterial und gelangt dann in den Bereich der Reformeranordnung 14. Es sei hier darauf hingewiesen, dass diese Mischmaterialströmung bzw. auch die Strömung des in der Mischkammer 26 gebildeten Gemisches durch ein nicht weiter dargestelltes Mischmaterialgebläse oder eine sonstige Förderanordnung erzeugt werden kann.

In der Reformeranordnung 14 durchströmt das Mischmaterial zunächst einen Flammhalter 38 und gelangt dann zu einer ersten Katalysatoranordnung 40. In Strömungsrichtung auf die erste Katalysatoranordnung 40 folgt eine zweite Katalysatoranordnung 42. Alternativ kann ein Katalysator mit zwei Katalysatorzonen vorgesehen sein. Stromabwärts der zweiten Katalysatoranordnung 42 ist ein Temperaturfühler 44 angeordnet. Weiterhin ist der Mischkammer 26 ein Zündorgan 46 zugeordnet, das in diese hineinragt und, wie im Folgenden noch dargelegt, durch Erregung das in der Mischkammer gebildete Gemisch zünden und zur Verbrennung bringen kann.

Der Flammhalter 38, die erste Katalysatoranordnung 40 und die zweite Katalysatoranordnung 42 sind über elastisches Material 48 an dem Gehäuse 16 getragen, um somit im Betrieb auftretende Vibrationen nicht auf diese drei Baugruppen zu übertragen.

Weiterhin erkennt man, dass die Reformeranordnung 14 bzw. das Gehäuse 16 in demjenigen Längenbereich, in welchem die zweite Katalysatoranordnung 42 angeordnet ist, radial außen von einem rohr- bzw. gehäuseartigen Isolationselement 50 umgeben ist, so dass das durch die Öffnungen 24 eintretende Mischmaterial in demjenigen Bereich, in welchem das Gehäuse 16 durch das Isolationselement 50 umgeben ist, im Wesentlichen nicht in thermische Wechselwirkung mit der Reformeranordnung 14 treten kann, sondern erst in dem dann folgenden Längenabschnitt, in welchem im Wesentlichen auch die erste Katalysatoranordnung 40 angeordnet ist.

Im Bereich des Mischmaterialströmungsraums 22 ist weiterhin ein zweites Zündorgan 52 vorgesehen, das sich in diesen Mischmaterialströmungsraum 22 hineinerstreckt und, wie im Folgenden dargelegt, das darin strömende Mischmaterial zünden und zur Verbrennung bringen kann.

Bei Eingliederung eines derartigen Reformersystems in ein Brennstoffzellensystem wird also durch dieses Reformersystem 10 ein wasserstoffgashaltiges Reformat erzeugt, das in einer Brennstoffzelle zusammen mit Luft bzw. Luftsauerstoff genutzt werden kann, um elektrische Energie zu erzeugen. Das die Brennstoffzelle verlassende Restreformat kann als so genanntes Anodenabgas dem Reformer zur besseren Gemischbildung mit Hilfe einer Fördereinheit zurückgeführt und dann mit Luft durchmischt werden bzw. zusammen mit Luft über die Öffnungen 24 in den Mischmaterialströmungsraum 22 eingeleitet werden, so dass dieses Gemisch aus Luft und Anodenabgas im Wesentlichen das vorangehend bereits erwähnte Mischmaterial bereitstellt.

In einer Startphase des Brennstoffzellensystems, also auch einer Startphase des Reformersystems 10, muss zunächst dafür gesorgt werden, dass verschiedene Systembereiche auf die geeignete Betriebstemperatur gebracht werden. Dies betrifft vor allem die beiden Katalysatoranordnungen 40, 42, von welchen die erste Katalysatoranordnung 40 so ausgebildet ist, dass dort im Wesentlichen eine exotherme katalytische Reaktion abläuft, während in der zweiten Katalysatoranordnung im Wesentlichen eine endotherme katalytische Reaktion abläuft. Allgemein ist es erforderlich, die Temperatur im Bereich der Katalysatoranordnung 14 auf eine Aktivierungstemperatur von etwa 330° anzuheben. Dies kann in der Startphase dadurch erfolgen, dass das in der Mischkammer 26 gebildete Gemisch aus Kohlenwasserstoffdampf und Mischmaterial, in dieser Phase im Wesentlichen aus Luft bestehend, gezündet und verbrannt wird. Die Verbrennungsabgase verlassen die Mischkammer 26 und durchströmen die beiden Katalysatoranordnungen 40, 42, wobei diese sehr schnell Wärme von den Verbrennungsabgasen aufnehmen und auf Betriebstemperatur gebracht werden. Um dann den Reformierungsprozess zu starten, wird beispielsweise durch kurze Unterbrechung des Brennstoffstroms bzw. Kohlenwasserstoffstroms die Verbrennung in der Mischkammer 26 beendet, so dass dann ein Gemisch aus Kohlenwasserstoffdampf und Luft bzw. Mischmaterial in die beiden Katalysatoranordnungen 40, 42 geleitet wird und dort der Reformierungsprozess startet. Es verlässt dann ein Reformat mit zunehmend ansteigendem Wasserstoffgasgehalt das Reformersystem 10 und gelangt zur Brennstoffzelle. Vor allem dann, wenn in dieser Betriebsphase die Brennstoffzelle selbst ebenfalls noch nicht auf Betriebstemperatur ist und insofern der Prozess zur Erzeugung elektrischer Energie noch nicht gestartet wurde, wird das Anodenabgas im Wesentlichen die gleiche Zusammensetzung aufweisen, wie das Reformat, das das Brennstoffzellensystem 10 verlässt. Dieses Restreformat bzw. Anodenabgas wird zusammen mit Luft durch die Öffnungen 24 in den Mischmaterialströmungsraum 22 zurückgeführt bzw. eingeleitet. Da in dieser Startphase die Temperatur der beiden Katalysatoranordnungen 40, 42 vergleichsweise nieder ist und noch deutlich unter der optimalen Prozesstemperatur liegt, wird gemäß der vorliegenden Erfindung das zweite Zündorgan 52 elektrisch erregt, so dass im Bereich des Mischmaterialströmungsraums Bedingungen geschaffen werden, bei welchen das Mischmaterial zündet und verbrannt wird. Die bei dieser Verbrennung entstehende Wärme erwärmt die Reformeranordnung 14 von außen bzw. verhindert, dass die im anlaufenden Reformierungsprozess entstehende Wärme verstärkt nach außen auf das im Mischmaterialströmungsraum 22 strömende Mischmaterial übertragen wird.

Dies führt zu einem deutlich schnelleren Anstieg der Temperatur im Bereich der Reformeranordnung 14 und somit einem deutlich schnelleren Erreichen der geeigneten optimalen Prozesstemperatur.

Außerdem erfährt die Gemischbildungsreaktion in der Gemischkammer die entsprechende Eduktvorwärmung

Um in dieser Phase nicht nur durch Erwärmung von außen die Reformeranordnung 14 weniger stark abzukühlen bzw. noch schneller zu erwärmen, sondern auch in der Reformeranordnung 14 selbst die Bedingungen für die Durchführung eines Reformierungsprozesses bereitstellen zu können, muss dafür gesorgt werden, dass auch nach Verbrennung des Mischmaterials im Mischmaterialströmungsraum 22 noch ausreichend Luft bzw. Luftsauerstoff vorhanden ist, um in der Mischkammer 26 mit dem Kohlenwasserstoffdampf ein für den Reformierungsprozess geeignetes Gemisch bereitzustellen. Dieses Gemisch ist vorzugsweise unterstöchiometrisch und sollte einen Lambda-Wert von etwa 0,4 aufweisen. D.h., die Verbrennung im Mischmaterialströmungsraum 22 wird mit derartigem Luftüberschuss durchgeführt, dass eine entsprechende Restluft- bzw. Restsauerstoffmenge zur Einleitung in die Mischkammer 26 sichergestellt werden kann.

Nachdem in der Reformeranordnung 14 dann geeignete thermische Bedingungen zur Durchführung eines stabilen Reformierungsprozesses ohne der Gefahr der Erzeugung von schädlichen Bestandteilen, wie z.B. Ruß, geschaffen sind, wird dann die Verbrennung im Mischmaterialströmungsraum 22 beendet. Dies kann beispielsweise dadurch erfolgen, dass kurzzeitig der Luftstrom unterbrochen wird. Auch das Beenden der Erregung des Zündorgans 52 kann abhängig von den äußeren Bedingungen und auch abhängig vom Mischungsverhältnis der Bestandteile des Mischmaterials zum Erlöschen der Verbrennung führen. Nachfolgend strömt dann das vergleichsweise kalte bzw. kältere Mischmaterial durch den Mischmaterialströmungsraum 22 und kann im folgenden Betrieb dann Wärme aus dem Bereich der Reformeranordnung 14, insbesondere aus dem Bereich der ersten Katalysatoranordnung 40 abtragen und somit bereits vorgewärmt in die Mischkammer 26 geleitet werden. Da in dieser normalen Betriebsphase dann das Mischmaterial mit unverändertem Mischungsverhältnis aus dem Mischmaterialströmungsraum 22 in die Mischkammer 26 gelangt, kann der Luftanteil bzw. der Luftsauerstoffanteil gegenüber der Verbrennungsphase gemindert werden, so dass in Verbindung mit der abgedampften Kohlenwasserstoffmenge dann wieder das unterstöchiometrische Gemisch in der Mischkammer 26 erzeugt wird.

Mit der vorliegenden Erfindung ist es in einfacher Art und Weise möglich, die Startphase des Reformierungsprozesses in einem Reformersystem deutlich zu verkürzen. Da sowohl in der Startphase als auch in der normalen Betriebsphase für eine Erwärmung des Mischmaterials gesorgt ist, nämlich entweder durch Verbrennung desselben oder durch Wärmeaufnahme von der Reformeranordnung 14, kann auf das Bereitstellen zusätzlicher Heizeinrichtungen für das in die Mischkammer einzuleitende Mischmaterial verzichtet werden.

Es ist selbstverständlich, dass die Zündung bzw. die Verbrennung des Mischmaterials nicht nur in demjenigen Bereich des Mischmaterialströmungsraums 22 erfolgen kann, in welchem dieser die Reformeranordnung 14 umgibt. Vielmehr könnte bei entsprechender baulicher Ausgestaltung das Mischmaterial auch bereits vor dem Heranführen an die Reformeranordnung in einem weiter stromaufwärts liegenden Bereich des Mischmaterialströmungsraums ggf. auch noch vor Einleitung durch die Öffnungen 24 gezündet und verbrannt werden, so dass bei dann weiterer Durchströmung desjenigen Bereichs des Mischmaterialströmungsraums 22, der auch in Fig. 1 erkennbar ist, die bei der Verbrennung entstehende Wärme auf die Reformeranordnung 14 übertragen werden kann.

## Patentansprüche

1. Reformersystem zur Erzeugung eines wasserstoffhaltigen Gases für ein Brennstoffzellensystem, insbesondere in einem Kraftfahrzeug, umfassend:
- eine mit Kohlenwasserstoff und Mischmaterial zu speisende Verdampferanordnung (12) zur Erzeugung eines Kohlenwasserstoffdampf/Mischmaterial-Gemisches,
- eine Reformeranordnung (14) mit Reformerkatalysatormaterial (40, 42) zur Umsetzung des Kohlenwasserstoffdampf/Mischmaterial-Gemisches zu wasserstoffhaltigem Gas,
wobei die Reformeranordnung (14) von einem Mischmaterialströmungsraum (22) umgeben ist, welcher von wenigstens einem Teil des in die Verdampferanordnung (12) einzuleitenden Mischmaterials durchströmbar ist zur Übertragung von Wärme zwischen der Reformeranordnung (14) und dem Mischmaterial,
**dadurch gekennzeichnet, dass** dem Mischmaterial-Strömungungsraum (22) eine Zündanordnung (52) zugeordnet ist zum Zünden und Verbrennen des durch diesen hindurchströmenden Mischmaterials im Mischmaterialströmungsraum.

2. Reformersystem nach Anspruch 1,
**dadurch gekennzeichnet, dass** eine Fördervorrichtung vorgesehen ist zum Fördern von Luft und Anodenabgas aus einem Brennstoffzellensystem als Mischmaterial oder Mischmaterialbestandteil durch den Mischmaterialströmungsraum (22).

3. Verfahren zum Betreiben eines Reformersystems nach einem der vorangehenden Ansprüche, bei welchem Verfahren Luft und Anodenabgas eines Brennstoffzellensystems als Mischmaterial oder Mischmaterialbestandteil im Mischmaterialströmungsraum (22) verbrannt und zur Verdampferanordnung (12) geleitet wird, wobei die Luft mit derartigem Überschuss bezüglich des Anodenabgases zugeführt wird, dass bei nachfolgender Durchmischung der in die Verdampferanordnung (12) eingeleiteten Luft mit Kohlenwasserstoffdampf ein unterstöchiometrisches Luft/Kohlenwasserstoffdampf-Gemischverhältnis erzeugt wird.

4. Verfahren nach Anspruch 3,
**dadurch gekennzeichnet, dass** das unterstöchiometrische Gemischverhältnis mit einem Lambda-Wert von etwa 0,4 erzeugt wird, um eine anschließende Reformierung an Reformerkatalysatormaterial (40, 42) durchzuführen.

5. Verfahren nach Anspruch 2 oder 3,
**dadurch gekennzeichnet, dass** das den Mischmaterialströmungsraum (22) durchströmende Mischmaterial zumindest in einer Startphase des Reformersystems (10) gezündet und verbrannt wird.
